# EUROPÄISCHE PATENTSCHRIFT

(11) **EP 2 796 910 B1**
(45) Veröffentlichungstag und Bekanntmachung des Hinweises auf die Patenterteilung: **18.12.2024**
(21) Anmeldenummer: 13178960.4
(22) Anmeldetag: 01.08.2013
(51) Int. Cl.: G02B 6/44, G02B 6/50

(54) **Endkappe**
End cap
Capuchon

(30) Priorität: 25.04.2013 DE 102013104206
(43) Veröffentlichungstag der Anmeldung: 29.10.2014
(73) Patentinhaber: Stark, Elena, 85247 Schwabhausen (DE)
(72) Erfinder: Stark, Elena, 85247 Schwabhausen (DE)
(74) Vertreter: Wittmann, Ernst-Ulrich

(56) Entgegenhaltungen:
- WO-A1-2012/107302
- WO-A2-2006/081541
- DE-A1- 19 632 476
- GB-A- 1 217 739

## Beschreibung

Die Erfindung betrifft eine Endkappe zum wenigstens teilweisen Abdecken eines Rohrs.

Insbesondere ist die erfindungsgemäße Endkappe geeignet, ein Glasfaser-Verlegerohr an der Ein- bzw. Austrittsstelle zu einem Verteilerkasten für Glasfaserbasierte Kommunikationsanlagen entweder abzuschließen oder einen definierten Eintritt der Glasfasern in den Verteilerkasten zu gewährleisten.

Derartige Verteilerkästen haben die Aufgabe, eine Schnittstelle zu bilden, entweder zwischen Weitverkehrsnetzen von Glasfasern oder zwischen einem Weitverkehrsnetz und einem oder mehreren Teilnetzen, die ein oder mehrere Häuser versorgen.

Im Stand der Technik werden zunächst die Glasfaser-Verlegerohre - die auf Grund ihrer Farbmarkierung gut voneinander zu unterscheiden sind - verlegt und anschließend werden in diese Rohre die Glasfasern mittels Druckluft eingebracht. Die Glasfasern kommen dann also im Verteilerkasten an und können dort nach Bedarf verbunden werden. Glasfaser-Verlegerohre, die verlegt wurden, aber noch nicht benötigt werden, werden am Verteilerkasten mit einer Kappe abgeschlossen, um u.a. das Eindringen von Schmutz und Feuchtigkeit zu verhindern. Es gibt also zwei Arten von Endkappen, die in einem Verteilerkasten benötigt werden: Geschlossene Endkappen, um die unbenutzten Glasfaser-Verlegerohre zu schützen, und offene Endkappen, durch welche die Glasfaser-Kabelstränge in den Verteilerkasten gezogen werden.

Für derartige Endkappen werden im Stand der Technik häufig Druckluftkupplungen bzw. entsprechende Abschlussstücke verwendet. Diese aus der Drucklufttechnik stammenden Teile sind jedoch verhältnismäßig teuer. Da sie für längeren Betrieb und höhere Drücke ausgelegt sind, müssen sie recht präzise gefertigt werden. Weiterhin bestehen diese Druckluftkupplungen in der Regel aus teureren Materialien wie z.B. Messing oder Edelstahl. Darüberhinaus sind die Außendurchmesser dieser Teile, relativ zu ihrem Innendurchmesser, ziemlich groß. Dadurch werden die Verteilerkästen unnötig groß bzw. die Kabelzuführungen werden zum Engpass beim Platzbedarf. Außerdem sind diese Druckluftkupplungen aufwändig zu montieren, weil sie in dieser beengten Situation schlecht zu handhaben sind. Beispielsweise müssen sie zum Lösen die am unteren Ende angeordnete Arretierring angehoben werden und das ist selbst mit Schnabelzangen oder Spezialwerkzeugen in dieser beengten Situation nur schwer, d.h. mit Kraftaufwand und relativ viel Geschicklichkeit zu bewerkstelligen.

Die GB 1 217 739 A zeigt einen Verbinder für Rohre und Elektrokabel, der ein Rohrverbindungselement aufweist, das mit Hilfe einer Überwurfmutter, die auf das Rohrverbindungselement geschraubt wird, auf ein Rohr geklemmt wird. Das Rohrverbindungselement hat eine zylindrische Grundform und umfasst einen innenliegenden, zylindrischen Aufnahmeabschnitt mit einer endseitigen Stirnfläche und einem Mantel. Der Aufnahmeabschnitt weist seitliche Schlitzungen auf, die sich nur teilweise über die Mantelhöhe erstrecken.

Weiterer Stand der Technik ist in den Dokumenten DE 196 32 476 A1, WO 2006/081541 A2, WO 2012/107302 A1 und DE 3 628 543 A1 diskutiert.

Ausgehend von diesem Stand der Technik ist es Aufgabe der vorliegenden Erfindung, zumindest einige Nachteile des Stands der Technik wenigstens teilweise zu überwinden bzw. zu verbessern.

Die Aufgabe wird mit einer Vorrichtung gemäß Anspruch 1 gelöst. Bevorzugte Ausführungsformen und Abwandlungen sind Gegenstand der Unteransprüche.

Die erfindungsgemäße Endkappe weist eine zylindrische Grundform auf. Sie lässt sich, entlang ihrer Längsachse, in einen innenliegenden, zylindrischen Aufnahmeabschnitt, der mit einer endseitigen Stirnfläche abgeschlossen ist, und in einen Bedienkopf, der dazu dient, Montage-Werkzeuge aufzunehmen oder der eine Angriffsfläche für händische Bedienung bietet gliedern.

Der Aufnahmeabschnitt weist eine seitliche Schlitzung und ein Innengewinde auf. Dabei sorgt die seitliche Schlitzung u.a. für eine gewisse Elastizität der Endkappe, damit diese gut auf das Glasfaser-Verlegerohr angepasst werden kann. Diese gute Passung kann weiterhin dadurch verbessert werden, dass sie mit einem Spannring umgeben wird. Für die günstige Anordnung eines solchen Spannrings ist in einer weiteren, erfindungsgemäßen Ausführungsform der Endkappe eine außenliegende, umlaufende Nut vorgesehen, welche u.a. ein Verrutschen des Spannrings, welcher auch als Sprengring ausgeführt sein kann verhindert. Dieser Spannring kann vorzugsweise aus Metall oder Kunststoff, bevorzugt aus einem elastischen Kunststoff ausgeführt werden. Entsprechend der vorliegenden Erfindung erstreckt sich die seitlich angeordnete Schlitzung nur teilweise über die Mantelhöhe der Endkappe und weist gemäß einer weiteren, besonders bevorzugten Ausführungsform im Bereich des Schlitzendes im Mantel eine Entspannungsbohrung auf, mit welcher sich u.a. die Elastizität der Stege weiter beeinflussen lässt.

Das Innengewinde im Bereich des Aufnahmeabschnitts sorgt dafür, dass die Endkappe ohne weitere Vorbereitung direkt auf das Verlegerohr aufgeschraubt werden kann. Dafür ist es besonders günstig, dass das genannte Gewinde als selbstschneidendes Gewinde gestaltet ist. Je nach geforderter Haltekraft können ein oder mehrere Innengewinde im Aufnahmeabschnitt angeordnet sein. Diese Innengewinde können ferner auch als ein- oder als mehrgängige Gewinde gestaltet sein. Um einen guten Abschluss des Glasfaser-Verlegerohrs zu erreichen, wird die Endkappe soweit eingeschraubt, dass dieses Glasfaser-Verlegerohr an der Stirnfläche des Aufnahmeabschnitts ansteht. Entsprechend einer weiteren alternativen Ausführungsform weist der Aufnahmeabschnitt einen Innendurchmesser auf, welcher zwischen 4 mm und 12 mm, insbesondere zwischen 6 mm und 9 mm beträgt.

Um die Dichtigkeit weiter zu erhöhen, kann an der genannten Stirnfläche ein Dichtelement. Mit diesem Dichtelement, welches als Scheibe, Kegel, Kegelstumpf (mit/ohne Loch) oder als Ring ausgestaltet sein kann, besteht ferner auch die Möglichkeit eine erfindungsgemäße Endkappe mit einer Öffnung zum Durchführen eines Glasfaserkabels im Bedienkopf für zwei Varianten (d.h. geschlossene oder teilweise geöffnete Endkappe) zu verwenden. So kann bei einer mit Öffnung versehenen Endkappenversion durch das Einlegen der Dichtungsscheibe die Öffnung verschlossen und somit eine ausreichende Abdichtung auch dieser Endkappe bereitgestellt werden. Durch diese Anordnung ergibt sich der erfindungsgemäße Vorteil, dass die Endkappe weder zu Montage noch zur Demontage angehoben werden muss bzw. eine Zugänglichkeit zur Aufnahmeöffnung des Rohrs nicht notwendig ist. Dabei ist für das Lösen der Endkappe relativ wenig Kraft aufzubringen und auch ist deutlich weniger Geschicklichkeit des Bedieners, insbesondere aufgrund der verbesserten Zugänglichkeit notwendig.

Insbesondere in Bezug auf eine nicht erfindungsgemäße durchgehend geschlitzte Ausführung ist es ferner notwendig, auch hierfür eine Dichtung bereit zu stellen. Hierzu wird gemäß einer weiteren, nicht erfindungsgemäßen Ausführungsform der vorliegenden Erfindung eine Dichtung bereit gestellt, welche wenigstens Teile der durchgehenden Schlitzung innerhalb der Mantelkontur verschließt und ggf. auch der Mantelinnenkontur im Anschluss an die durchgehende Schlitzung angepasst ist. Darüber hinaus weist eine solche Dichtung auch einen zylindrischen Abschnitt auf, welcher im Bereich der innenliegenden Stirnfläche des zylindrischen Aufnahmeabschnitts angeordnet ist. Hierüber ist insbesondere die Dichtung fixierbar. Dabei kann dieser Abschnitt der Dichtung auch Ausnehmungen aufweisen, damit ein Aufstecken der Dichtung in Kombination mit der vollständig geschlitzten Hülse möglich ist und ein Glasfaserkabel teilweise aufnehmbar bzw. fixierbar ist.

Die konzentrisch angeordnete Öffnung der Endkappe in der geöffneten Version ist mit einem Knickschutz ausgestattet, der in Form einer als Trichter geformten Öffnung (Knickschutztrichter) realisiert ist, dessen Innenkontur vorzugsweise wenigstens in Abschnitten konvex ausgestaltet und/oder einen vorgegebenen Biegeradius aufweist. Darüber hinaus kann der Knickschutztrichter derart ausgeformt werden, dass auch die Übergänge zwischen Innenkontur und Außenkontur der Endkappe stetig verlaufen, so dass insbesondere im Übergang kein Kante auftritt, an welcher ein Kabel, dass durch die Öffnung geführt wird, beschädigt werden könnte. Dabei ist die Kontur des Knickschutztrichters so gewählt, dass bei Anliegen eines beispielsweise Glasfaserkabels ein Knicken des Kabels weitgehend verhindert wird und somit ein Knickschutz bereitgestellt wird, der nicht aus der Öffnung der Hülse selbst hervorragt. Gegebenenfalls kann ein solcher Knickschutz auch mit anderen Maßnahmen (Knickschutztüllen) zum Verhindern eines Abknickens des durchgeführten Kabels kombiniert werden.

Der Bedienkopf einer erfindungsgemäßen Endkappe kann offen oder geschlossen gestaltet sein, je nachdem ob die Endkappe für die Durchführung von Glasfaser-Kabeln oder zum Abschluss eines noch nicht benötigten Glasfaser-Verlegerohrs verwendet werden soll. Die äußere Oberfläche des Bedienkopfs kann so ausgestattet sein, dass die Endkappe besonders einfach - selbst bei beengten Raumverhältnissen, wie sie am Rande eines Verteilerkastens häufig sind - aufgeschraubt werden kann. Deshalb ist es vorteilhaft, die Endkappe entweder mit einer Rändelung zu versehen, so dass sie händisch aufgeschraubt werden kann, oder mit außenliegenden Abflachungen auszubilden, beispielsweise auch als Sechskant, um die Endkappe mit einem Gabelschlüssel oder einem Sechskant-Steckschlüssel zu montieren.

Besonders vorteilhaft ist es, Aufnahmen für Werkzeuge am Ende des Bedienkopfs vorzusehen, die auch bei beengten Raumverhältnissen gut betätigt werden können. Dafür ist beispielsweise eine mehreckige Vertiefung günstig, die einen Inbus- oder Torx-Schüssel oder dergleichen aufnehmen kann. Zu diesem Zweck kann auch die konzentrische Öffnung der Endkappe mehreckig gestaltet sein. Sehr vorteilhaft ist es, zwei oder mehr Löcher, insbesondere Sacklöcher, vorzusehen, die sehr einfach und kostengünstig durch Bohren herzustellen sind und die mit einem Zapfenschlüssel mit zwei bzw. mit mehreren Zapfen betätigt werden können.

Die erfindungsgemäße Endkappe kann aus einem eher preiswerten Material gefertigt sein, beispielsweise aus einem harten Kunststoff, wie z.B. aus Polypropylen oder Polyvinylchlorid, oder aus einem Metall, beispielsweise aus einer Stahllegierung oder aus Aluminium, insbesondere aus hocheloxiertem Aluminium. Hierbei sollte nur sichergestellt werden, dass das verwendete Material insbesondere im Bereich des selbstschneidenden Innengewindes ausreichend hart ist, damit ein Einschneiden der Rohrwandung ermöglicht wird. Weiterhin ist die erfindungsgemäße Endkappe in ihrer Herstellung besonders einfach, da sie - im Gegensatz zu Lösungen nach dem Stand der Technik, z.B. Druckluftkupplungen - keine beweglichen Teile enthalten muss.

Die Erfindung umfasst darüber hinaus auch die Verwendung der erfindungsgemäßen Endkappe für eine Glasfaser-Verlegerohrs, bevorzugt zum teilweise oder vollständigen Abschluss eines Endabschnitts des Glasfaser-Verlegerohrs und vorzugsweise zur Zugentlastung und/oder zum Knickschutz von Lichtwellenleiterkabeln bzw. zur Abdichtung eines Mantels für Lichtwellenleiterkabel oder eines entsprechenden Rohrs. Nachfolgend wird die Erfindung anhand verschiedener Ausführungsformen beschrieben, wobei darauf hingewiesen wird, dass die Erfindung nicht auf die hier dargestellte Ausführung beschränkt ist, sondern dass vielmehr entsprechende Abwandlungen auch im Sinne der vorliegenden Erfindung sind.

Dabei zeigen:
Fig. 1 : eine erste Ausführungsform der erfindungsgemäßen Endkappe in perspektivischer Ansicht;
Fig. 2 : einen schematischen Längsschnitt durch die erfindungsgemäße Endkappe;
Fig. 3 : eine weitere Ausführungsform der erfindungsgemäßen Endkappe in perspektivischer Ansicht;
Fig. 4 : einen schematischen Längsschnitt durch eine weitere Ausführungsform der erfindungsgemäßen Endkappe;
Fig. 5a und 5b: eine alternative, nicht erfindungsgemäße Ausführungsform mit durchgehender Längsschlitzung in perspektivischer und Frontansicht;
Fig. 6: die Alternative aus Fig. 5 mit eingelegter Dichtung, und
Fig. 7: die Dichtung aus Fig. 6 im Detail.

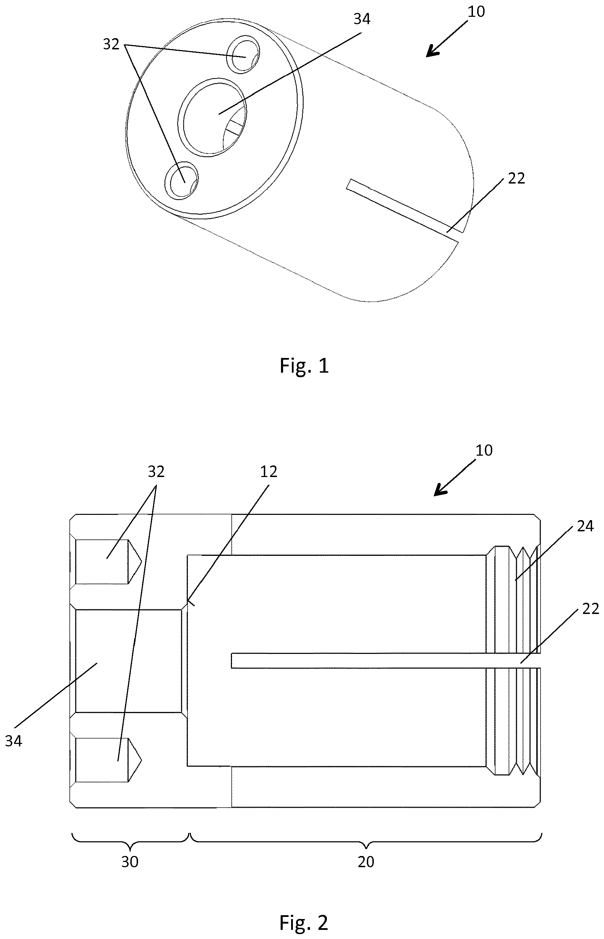

Figur 1 zeigt eine perspektivische Ansicht der erfindungsgemäßen Endkappe 10.

Dabei ist die zylindrische Grundform der Endkappe 10 und eine seitliche Schlitzung 22 gut erkennbar. Es ist hier eine Ausführungsform mit einer konzentrischen Öffnung 34 gezeigt, eine weitere erfindungsgemäße Ausführungsform ohne diese Öffnung eignet sich besonders, um Verlegerohre abzuschließen. Weiterhin sind zwei Sacklöcher 32 erkennbar, in die ein Zapfenschlüssel mit zwei Zapfen eingesetzt werden kann und mit denen die Endkappe 10 auch bei beengten Raumverhältnissen sehr einfach und schnell montiert werden kann. Es sind auch Ausführungsformen mit drei oder mehr Sacklöchern 32 möglich. Statt dieser Löcher können auch mehreckige Vertiefungen im Endbereich des Bedienkopfs vorgesehen sein, beispielsweise um als Montagewerkzeug einen Inbus- oder Torx-Schüssel oder dergleichen aufzunehmen. Als Sonderform kann die konzentrischen Öffnung 34 so gestaltet sein, dass sie einen Inbus- oder Torx-Schüssel oder dergleichen aufnehmen kann. Ggf. kann auf die Bedienelemente auch vollständig verzichtet werden.

Der schematische Längsschnitt durch die Endkappe 10 in Figur 2 zeigt die Struktur der Endkappe. Sie gliedert sich in einen Bedienkopf 30 und in einen Aufnahmeteil 20. Die gezeigte Ausführungsform weist, wie bei Figur 1, im Bereich des Bedienkopfs 30 eine konzentrische Öffnung 34 und zwei Sacklöcher 32 auf - deren Zweck und alternative Ausführungsformen sind in der Erklärung zu Figur 1 erläutert. Der Aufnahmeteil 20 weist eine seitliche Schlitzung 22 auf, die sich hier über deutlich mehr als über die Hälfte der Länge des Aufnahmeteils 20 erstreckt. Der Aufnahmeteil 20 kann ein- oder mehrfache seitliche Schlitzungen 22 aufweisen. Der Aufnahmeteil 20 weist dabei bevorzugt einen Innendurchmesser zwischen 4 mm und 12 mm, insbesondere zwischen 6 mm und 9 mm, auf.

Figur 2 zeigt im Endbereich des Aufnahmeteils 20 ein Innengewinde 24, das als selbstschneidendes Gewinde ausgestaltet ist. Dabei kann das Innengewinde 24 nicht nur im Endbereich, sondern auch an anderen Stellen des Aufnahmeteils 20 angeordnet sein, und es können auch mehrere Innengewinde 24 im Aufnahmeteil 20 angebracht werden. Das Innengewinde 24 kann ein- oder mehrgängig gestaltet sein. Am Ende des Aufnahmeteils 20 ist eine Stirnfläche 12 angeordnet, mit der das Verlegerohr dicht abgeschlossen werden kann. Für besonders hohe Dichtigkeitsanforderungen kann an der Stirnfläche 12 zusätzlich ein Dichtelement, insbesondere in Form einer Scheibe, eines Kegels (der ggf. etwas in das Verlegerohr hineinragt) oder eines Rings, angebracht werden (nicht gezeigt in Figur 2).

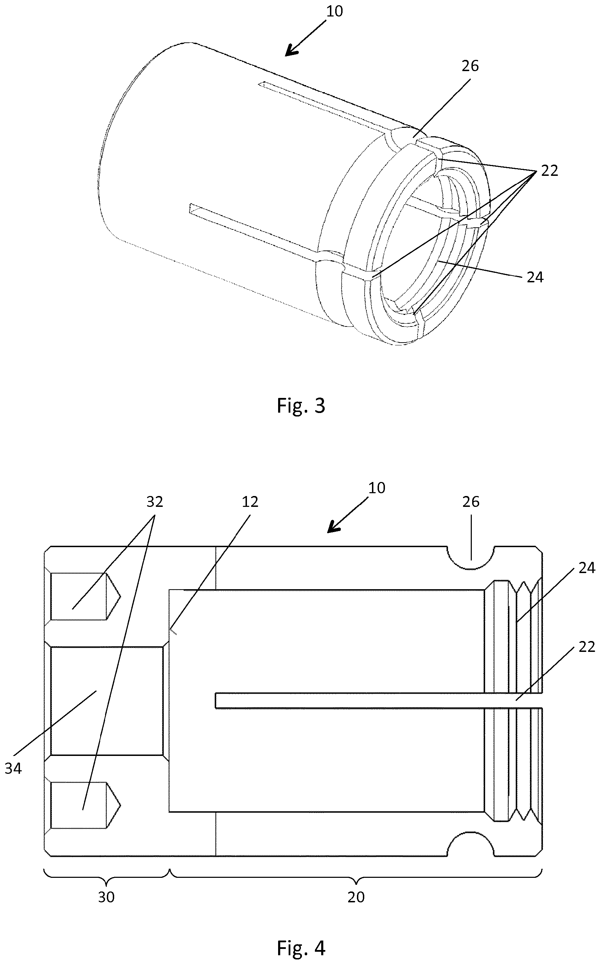

Figur 3 zeigt eine weitere Ausführungsform der erfindungsgemäßen Endkappe 10 mit einer umlaufenden, außenliegenden Nut 26, die zur Aufnahme eines Spannrings geeignet ist. Mit einem derartigen Spannring kann die Passung und die Dichtigkeit der erfindungsgemäßen Endkappe noch weiter gesteigert werden. Der genannte Spannring kann aus Metall oder Kunststoff, bevorzugt aus einem elastischen Kunststoff, insbesondere als Sprengring, ausgeführt werden. Auf Figur 3 ist weiterhin deutlich das Innengewinde 24 zu erkennen. Ferner sind die seitlichen Schlitzungen 22 zu sehen, wobei die dargestellte Ausführungsform vier derartige Schlitzungen 22 aufweist.

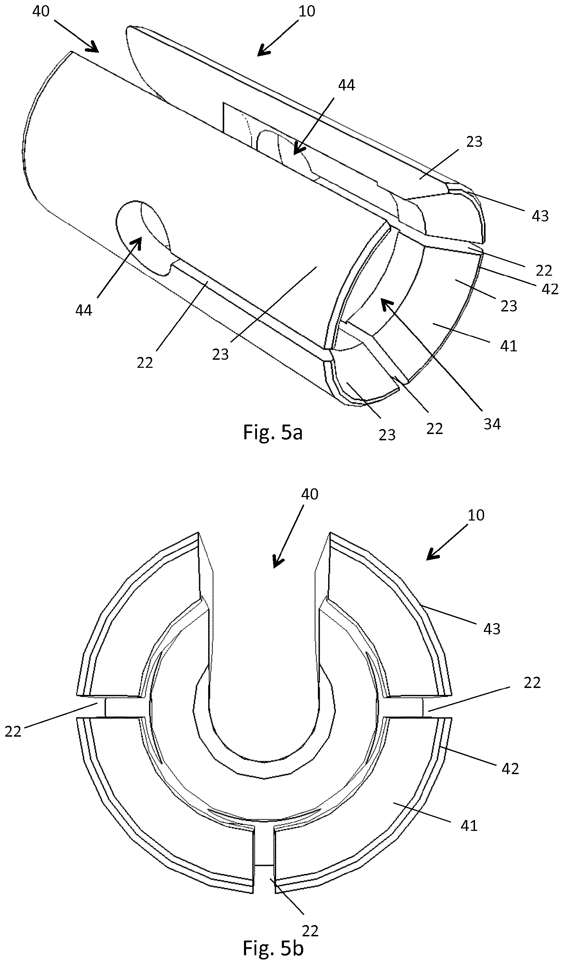

Figur 4 zeigt einen schematischen Längsschnitt durch die erfindungsgemäße Endkappe 10, in der Ausführungsform mit einer umlaufenden, außenliegenden Nut 26. Die übrigen Bezugszeichen sind gleich den Bezugszeichen von Figur 2. Auch die vorteilhaften Ausführungsformen und die Erläuterungen zu Figur 2 gelten analog. Figur 5 zeigt eine alternative, nicht erfindungsgemäße Ausführungsform erfindungsgemäße Endkappe 10 mit durchgehender Längsschlitzung 40, welche zusätzlich zu den Teilschlitzungen 22 im Umfang der Endkappe angeordnet ist. Die Schlitzung dient dabei zum seitlichen Einführen eines Kabels, insbesondere eines Glasfaserkabels (nicht dargestellt) und dem anschließenden Anbringen der Endkappe auf dem Verlegerohr. Diese sog. geteilte Variante der Endkappenausführung hat somit den Vorteil, dass die Endkappe auch für bereits "befüllte" Verlegerohre verwendet werden kann.

In der Darstellung der Figur 5 ist ferner auch eine bevorzugte Ausführungsform der Teilschlitzungen 22 gezeigt, bei welchen diese am inneren Abschluss eine Entspannungsbohrung 44 aufweisen, die insbesondere dazu dient, dass die Flexibilität/Elastizität der Stege 23 zwischen den Teilschlitzungen 22 und/oder durchgehenden Schlitzungen 40 einstellbar ist. Dies hat dann Vorteil, dass durch diese Einstellbarkeit die Vorspannung beim Aufdrehen der Endkappe auf ein Verlegerohr variabel gestaltet werden kann und somit einerseits der Kraftaufwand für die Montage bzw. Demontage bestimmbar ist, bzw. auch die Fixierung der Endkappe mit dem Verlegerohr festgelegt werden kann.

Darüber hinaus zeigt die in Figur 5 dargestellte Ausführungsform eine mit dem erfindungsgemäßen Knickschutz ausgerüstete Öffnung 34, wobei hier der Knickschutz als innenliegender Knickschutztrichter 41 ausgeführt ist. Innenliegend hat hierzu der Trichter eine konvexe Kontur, welche sicher stellt, dass beim Verbiegen des in der Öffnung aufgenommenen Glasfaserkabels dieses nur entlang dessen Konturlinie verbogen werden kann und somit möglichst eine knickende Scherung vermieden wird. Am Endbereich 42 des Trichters 41 geht die innenliegende Kontur mit einer stetigen Krümmung 43 in die Außenkontur der Endkappe (im wesentlichen einer zylindrische Außenkontur) über, so dass keine scharfen Kanten oder dergleichen entstehen. Durch diese Form kann weitgehend sichergestellt werden, dass ein Knickung eines in der Öffnung geführten Glasfaserkabels vermieden werden kann. Ggf. kann diese Art des Knickschutzes auch mit klassischen Kabeltüllen kombiniert werden, welche ggf. auch in die Öffnung 34 hineinragt.

Insbesondere in Bezug auf den Einsatz dieser Art des Knickschutzes sei ausdrücklich darauf hingewiesen, dass die vorliegende Erfindung nicht auf die Kombination von durchgehender Schlitzung mit dem Knickschutz beschränkt ist, sondern dass ein derartiger Knickschutz auch mit den Ausführungsformen der vorliegenden Erfindung kombinierbar ist.

Figur 5b zeigt mit den entsprechenden Bezugszeichen die Ausführungsform aus Figur 5a.

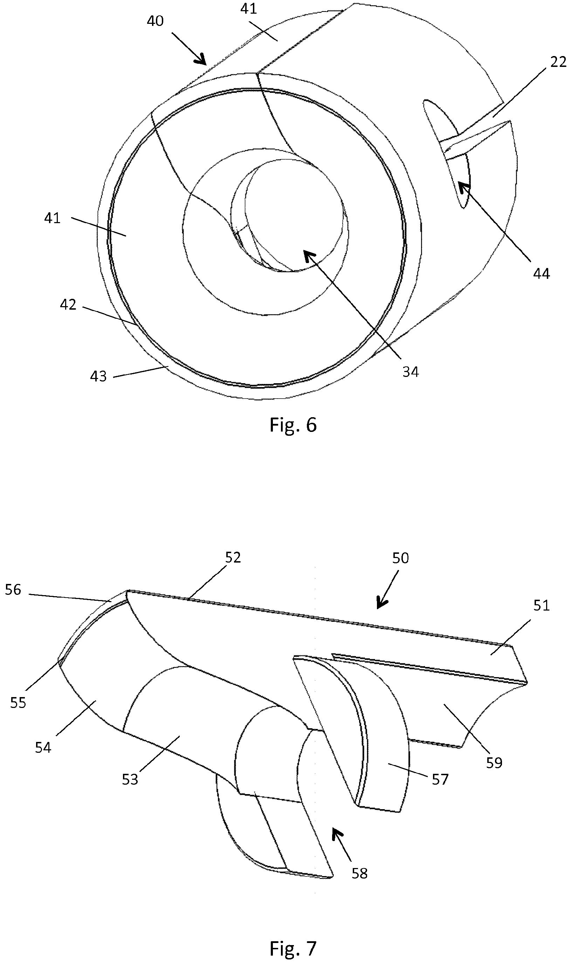

Figur 6 zeigt die Ausführungsform der Figur 5 mit eingelegter Dichtung 50, um die durchgehende seitliche Schlitzung 40 nach dem Einführen eines Kabels abzuschließen und in gewissem Umfang abzudichten, damit möglichst keine Verschmutzung in dem Verlegerohr auftreten kann.

Figur 7 zeigt die Dichtung 50 freigestellt, wobei die Form der Dichtung den inneren und äußeren Konturen der Endkappe angepasst ist. Dabei weißt die Dichtung seitlich einen unteren Steg 51 und einen oberen Steg 52 auf, wobei der untere Steg 51 im westlichen der zylindrischen Grundstruktur der Endkappe und der Form der Schlitzung 40 angepasst ist. Im Bereich des oberen Stegs 52 ist die Form innen der Kontur des Knickschutztrichters angepasst, so dass der Steg 52 hier den unteren Trichterabschnitt 53 und den oberen Trichterabschnitt 54 in dessen Kontur fortführt bzw. ergänzt. Auch der Endbereich 55 und Übergangsbereich 56 sind hier der Außen- und Innenkontur der Endkappe angepasst bzw. schließen die Öffnung des durchgehenden Schlitzes 40. Schließlich umfasst die Dichtung 50 auch noch einen innenliegenden zylindrischen Abschnitt 57 mit eine schlitzartigen Öffnung 58, welche einerseits im Anschluss an die innenliegende Stirnfläche 12 der Endkappe angeordnet ist und durch das Einführen des Verlegerohrs zwischen dessen Endabschnitten und der Stirnfläche der Endkappe geklemmt bzw. fixiert wird. Damit wird nicht nur die Dichtung 50 zum Verlegerohr bewerkstelligt, sondern auch die Fixierung der Dichtung in Bezug auf den Abschluss der seitlichen durchgehenden Schlitzung bereit gestellt.

### Liste der Bezugszeichen

- 10: Endkappe
- 12: Stirnfläche
- 20: Aufnahmeteil
- 22: seitliche Schlitzung
- 23: Steg
- 24: Innengewinde
- 26: umlaufende Nut
- 30: Bedienkopf
- 32: Sacklöcher
- 34: konzentrische Öffnung
- 40: durchlaufender Schlitz
- 41: Knickschutztrichter
- 42/55: Endbereich
- 43: Übergang
- 44: Entspannungsöffnung
- 50: Dichtung
- 51/52: unterer und oberer Steg
- 53/54: unterer und oberer Trichterabschnitt
- 56: Übergangsbereich
- 57: Anschlagsabschnitt
- 58: Öffnung
- 59: innerer zylindrischer Abschnitt
- 60: zylinderabschnitt der Öffnung

## Patentansprüche

1. Endkappe, zum wenigstens teilweisen Abdecken eines Rohrs, insbesondere eines Glasfaser-Verlegerohrs, mit einer zylindrischen Grundform, die entlang ihrer Längsachse einen innenliegenden, zylindrischen Aufnahmeabschnitt (20) mit einer endseitigen Stirnfläche (12) und einen Mantel aufweist, wobei der Aufnahmeabschnitt (20) mindestens eine seitliche Schlitzung (22) aufweist, die sich nur teilweise über die Mantelhöhe erstreckt, **dadurch gekennzeichnet, dass** der Aufnahmeabschnitt (20) ein selbstschneidendes Innengewinde (24) aufweist,
die Endkappe des Weiteren einen Bedienkopf (30) zum Aufschrauben der Endkappe direkt auf ein Verlegerohr aufweist,
der Bedienkopf eine konzentrische Öffnung (34), insbesondere zur Durchführung eines Glasfaserkabels, aufweist, und
die konzentrische Öffnung (34) als Knickschutztrichter (41) ausgeführt ist, dessen Innenkontur vorzugsweise wenigstens abschnittsweise konvex ist und/oder einen vorgegebenen Biegeradius aufweist.

2. Endkappe nach Anspruch 1, **dadurch gekennzeichnet, dass** der Bedienkopf (30) Elemente zur händischen Betätigung wie beispielsweise einen Rändelbereich und/oder zur Betätigung mit einem wenigstens formschlüssig wirkenden Werkzeug aufweist, wobei insbesondere zur formschlüssigen Kraftübertragung wenigstens zwei Bohrungen (32) für einen Zapfenschlüssel und/oder eine Aufnahme für Inbus- oder Torx-Schlüssel oder dergleichen und/oder Abflachungen für einen Gabelschlüssel vorgesehen sind.

3. Endkappe nach einem der vorherigen Ansprüche, **dadurch gekennzeichnet, dass** der Bedienkopf (30) ein geschlossenes Ende oder einen Anschlag für das Rohr im Aufnahmeabschnitt (20) bildet.

4. Endkappe nach einem der vorherigen Ansprüche, **dadurch gekennzeichnet, dass** die Innenkontur des Knickschutztrichters (41) stetig in die Außenkontur der Endkappe übergeht.

5. Endkappe nach einem der vorherigen Ansprüche, **dadurch gekennzeichnet, dass** die seitliche Schlitzung (22) am Endpunkt innerhalb der Mantelkontur eine Entspannungsbohrung (44) aufweist.

6. Endkappe nach einem der vorherigen Ansprüche, **dadurch gekennzeichnet, dass** der Aufnahmeabschnitt (20) zwei, drei oder eine Vielzahl von ein- oder mehrgängigen Innengewinden (24) aufweist.

7. Endkappe nach einem der vorherigen Ansprüche, **dadurch gekennzeichnet, dass** die Endkappe (10) aus Metall oder Kunststoff, bevorzugt aus einem harten Kunststoff wie beispielsweise Polypropylen oder Polyvinylchlorid, aus einer Stahllegierung oder aus Aluminium, insbesondere aus hocheloxiertem Aluminium, gefertigt ist.

8. Endkappe nach einem der vorherigen Ansprüche, **dadurch gekennzeichnet, dass** an der Endkappe im Bereich der Aufnahmeöffnung des Aufnahmeabschnitts (20) für das Kunststoffrohr eine außenliegende Nut (26), zur Aufnahme eines Spannrings, angeordnet ist.

9. Endkappe nach einem der vorherigen Ansprüche, **dadurch gekennzeichnet, dass** der Aufnahmeteil (20) mehrere Teilschlitzungen (22) aufweist, die den Aufnahmeteil in eine Mehrzahl von Stege (23) trennen, wobei jede Teilschlitzung (22) an ihrem inneren Abschluss eine Entspannungsbohrung (44) aufweist, die dazu dient, die Elastizität der Stege (23) zwischen den Teilschlitzungen (22) einzustellen.

10. Verwendung einer Endkappe (10) nach einem der vorherigen Ansprüche für eine Glasfaser-Verlegerohrs, bevorzugt zum teilweisen oder vollständigen Abschluss eines Endabschnitts des Glasfaser-Verlegerohrs und vorzugsweise zur Zugentlastung und/oder zum Knickschutz von Lichtwellenleiterkabeln bzw. zur Abdichtung eines Mantels für Lichtwellenleiterkabel oder eines entsprechenden Rohrs.

## Claims

1. End cap for at least partially covering a pipe, in particular a glass fibre conduit pipe, having a cylindrical basic shape which along its longitudinal axis has an internal cylindrical receptacle portion (20) having an end-proximal end face (12) and a casing, wherein the receptacle portion (20) has at least one lateral slot (22) which only extends partially over the height of the casing, **characterized in that**
the receptacle portion (20) has a self-tapping internal thread (24);
the end cap furthermore has an operating head (30) for screwing the end cap directly onto a conduit pipe;
the operating head has a concentric opening (34), in particular for feeding through a glass fibre cable; and
the concentric opening (34) is embodied as an anti-kink funnel (41), the internal contour of the latter preferably being convex at least in portions and/or having a predefined bending radius.

2. End cap according to Claim 1, **characterized in that** the operating head (30) has elements for manual activation such as, for example, a knurled region and/or for activation by a tool which acts at least in a form-fitting manner, wherein, in particular for the form-fitting transmission of force, at least two bores (32) for a pin wrench, and/or a receptacle for Allen or Torx keys or the like, and/or flat surfaces for an open-end wrench are provided.

3. End cap according to one of the preceding claims, **characterized in that**
the operating head (30) forms a closed end or a detent for the pipe in the receptacle portion (20).

4. End cap according to one of the preceding claims, **characterized in that**
the internal contour of the anti-kink funnel (41) steadily transitions into the external contour of the end cap.

5. End cap according to one of the preceding claims **characterized in that**
the lateral slot (22) has a relief bore (44) at the end point within the casing contour.

6. End cap according to one of the preceding claims, **characterized in that**
the receptacle portion (20) has two, three, or a multiplicity of single or multiple internal threads (24) .

7. End cap according to one of the preceding claims, **characterized in that**
the end cap (10) is made of metal or plastics material, preferably of a hard plastics material such as, for example, polypropylene or polyvinylchloride, of a steel alloy, or of aluminium, in particular of highly anodized aluminium.

8. End cap according to one of the preceding claims, **characterized in that**
an external groove (26) for receiving a circlip is disposed on the end cap in the region of the receptacle opening of the receptacle portion (20) for the plastic pipe.

9. End cap according to one of the preceding claims, **characterized in that**
the receptacle part (20) has a plurality of partial slots (22) which separate the receptacle part into a plurality of webs (23), wherein each partial slot (22) on its internal end has a relief bore (44) which serves to set the elasticity of the webs (23) between the partial slots (22).

10. Use of an end cap (10) according to one of the preceding claims for a glass fibre conduit pipe, preferably for partially or completely closing off an end portion of the glass fibre conduit pipe, and preferably for tension relief and/or kink protection of fibre-optic cables, or for sealing a casing for fibre-optic cables or a corresponding pipe.

## Revendications

1. Capuchon d'extrémité destiné à recouvrir au moins partiellement un tube, notamment un tube de pose à fibres optiques, avec une forme de base cylindrique qui présente, le long de son axe longitudinal, une section de réception cylindrique intérieure (20) avec une face frontale d'extrémité (12) et une enveloppe, la section de réception (20) présentant au moins une fente latérale (22) qui ne s'étend que partiellement sur la hauteur de l'enveloppe, **caractérisé en ce que** la section de réception (20) présente un filetage intérieur autotaraudeur (24),
le capuchon d'extrémité présente en outre une tête de commande (30) pour visser le capuchon d'extrémité directement sur un tube de pose,
la tête de commande présente une ouverture concentrique (34), notamment pour le passage d'un câble à fibres optiques, et
l'ouverture concentrique (34) est réalisée sous forme d'entonnoir anti-pliure (41), dont le contour intérieur est de préférence convexe au moins par sections et/ou présente un rayon de courbure prédéfini.

2. Capuchon d'extrémité selon la revendication 1, **caractérisé en ce que**
la tête de commande (30) présente des éléments pour l'actionnement manuel comme par exemple une zone moletée et/ou pour l'actionnement avec un outil agissant au moins par complémentarité de forme, au moins deux alésages (32) pour une clé à ergots et/ou un logement pour clé Allen ou Torx ou similaire et/ou des méplats pour une clé à fourche étant notamment prévus pour la transmission de force par complémentarité de forme.

3. Capuchon d'extrémité selon l'une quelconque des revendications précédentes, **caractérisé en ce que** la tête de commande (30) forme une extrémité fermée ou une butée pour le tube dans la section de réception (20).

4. Capuchon d'extrémité selon l'une quelconque des revendications précédentes, **caractérisé en ce que** le contour intérieur de l'entonnoir anti-pliure (41) se fond de manière continue dans le contour extérieur du capuchon d'extrémité.

5. Capuchon d'extrémité selon l'une quelconque des revendications précédentes, **caractérisé en ce que** la fente latérale (22) présente un alésage de détente (44) au point d'extrémité à l'intérieur du contour de l'enveloppe.

6. Capuchon d'extrémité selon l'une quelconque des revendications précédentes, **caractérisé en ce que** la section de réception (20) présente deux, trois ou une pluralité de filetages intérieurs (24) à un ou plusieurs filets.

7. Capuchon d'extrémité selon l'une quelconque des revendications précédentes, **caractérisé en ce que** le capuchon d'extrémité (10) est fabriqué en métal ou en matière plastique, de préférence en une matière plastique dure telle que le polypropylène ou le chlorure de polyvinyle, en un alliage d'acier ou en aluminium, notamment en aluminium hautement anodisé.

8. Capuchon d'extrémité selon l'une quelconque des revendications précédentes, **caractérisé en ce qu'**une rainure extérieure (26) destinée à recevoir une bague de serrage est agencée sur le capuchon d'extrémité dans la zone de l'ouverture de réception de la section de réception (20) pour le tube en matière plastique.

9. Capuchon d'extrémité selon l'une quelconque des revendications précédentes, **caractérisé en ce que** la section de réception (20) présente plusieurs fentes partielles (22) qui séparent la partie de réception en une pluralité d'entretoises (23), chaque fente partielle (22) présentant à sa terminaison intérieure un alésage de détente (44) qui sert à ajuster l'élasticité des entretoises (23) entre les fentes partielles (22).

10. Utilisation d'un capuchon d'extrémité (10) selon l'une quelconque des revendications précédentes pour un tube de pose à fibres optiques, de préférence pour la terminaison partielle ou totale d'une section d'extrémité du tube de pose à fibres optiques et de préférence pour la décharge de traction et/ou la protection contre les pliures de câbles à fibres optiques ou pour l'étanchéité d'une enveloppe pour câbles à fibres optiques ou d'un tube correspondant.
